(19) **Europäisches Patentamt / European Patent Office / Office européen des brevets**

(11) **EP 4 597 323 A1**

(12) **EUROPEAN PATENT APPLICATION**
published in accordance with Art. 153(4) EPC

(43) Date of publication:
06.08.2025 Bulletin 2025/32

(21) Application number: 22805907.7

(22) Date of filing: 29.09.2022

(51) International Patent Classification (IPC):
$G06F\ 11/22$ (2006.01)     $G06F\ 11/30$ (2006.01)
$G06N\ 20/00$ (2019.01)

(52) Cooperative Patent Classification (CPC):
G06F 11/2236; G06F 11/3013; G06N 3/08;
G06N 7/01; G06N 20/00

(86) International application number:
PCT/ES2022/070620

(87) International publication number:
WO 2024/069024 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Ikerlan, S. Coop
20500 Arrasate-Mondragon (ES)

(72) Inventors:
• FLORES BARROSO, José Luis
  20500 Arrasate-Mondragón, Guipúzcoa (ES)

• ECEIZA OLAIZOLA, Maialen
  20500 Arrasate-Mondragón, Guipúzcoa (ES)
• ITURBE URRETXA, Mikel
  20500 Arrasate/Mondragón, Gipuzkoa (ES)
• GRACENEA ZAPIRAIN, María Izaskun
  20120 Hernani - Gipuzkoa (ES)

(74) Representative: ABG Intellectual Property Law,
S.L.
Avenida de Burgos, 16D
Edificio Euromor
28036 Madrid (ES)

(54) **APPARATUS FOR IDENTIFYING ERRONEOUS INPUT CONDITIONS IN A CONTROLLER DEVICE**

(57) The present invention relates to an apparatus (1) for identifying input patterns which induce operation errors in a controller device (2), for example, a microcontroller or another embedded system. The apparatus (1) is designed to test said controller device (2) and locate possible operation errors thereof. To that end, physical and logic information extracted during the operation of the controller device (2) is combined with information relating to the standby mode and/or the correct operating mode of said controller device (2). The apparatus (1) comprises a monitoring module (1.3) and a machine learning module (1.4), which are optimized to conduct a search in a search space of input patterns and to locate input patterns which induce errors in the controller device (2).

## FIG. 5

$e_1 = [0,220]$ ➡ $v_1 = U[0,220]$ ➡ $e_1 = 117$

$e_2 = [0,220]$ ➡ $v_2 = U[0,220]$ ➡ $e_2 = 98$

$e_3 = [0,10]$ ➡ $v_3 = U[0,10]$ ➡ $e_3 = 50$

$e_4 = [-10,+10]$ ➡ $v_4 = U[-10,+10]$ ➡ $e_4 = 5.8$

$e_5 = [0,360]$ ➡ $v_5 = U[0,360]$ ➡ $e_5 = 2.7$

EP 4 597 323 A1

Description

## OBJECT OF THE INVENTION

The present invention belongs to the field of system error detection. Particularly, it discloses an apparatus for identifying erroneous input conditions in a controller device (for example, a microcontroller).

## BACKGROUND OF THE INVENTION

One of the fields of the art undergoing the most intense development is the field of hardware and software system testing techniques.

Embedded systems are dedicated hardware and software solutions which have been designed to perform specific functions and usually interact with the physical world through their peripherals. Unlike general-purpose systems which have sufficient resources, embedded systems are designed to have the lowest possible cost which entails the elimination of many hardware and software functionalities that impact security capabilities such as, among others, memory space protection by means of randomization techniques (ASLR), or data execution prevention (DEP), software security subsystem elimination, or even the absence of an operating system.

Such systems are usually part of other more complex structures and often form the technological basis of the Internet of Things (IoT). Accordingly, systems of this type have been deployed for many years in many environments, particularly the deployment of embedded systems in all kinds of environments has increased exponentially with the growth of communications.

The security of these systems has become a relevant factor due not only to the deployed volume and the limitations of these systems but also to the need to accelerate the deployment cycle of such systems, making the securitization of such systems even more difficult. In light of this situation, software development technologies incorporate testing stages which are, however, insufficient unless they involve a long time and/or many resources. In addition to these aspects, embedded systems present another series of added difficulties such as the impossibility to execute high volumes of tests given the hardware/software limitations and the difficulty in providing software replicas given the heterogeneity and specificity of the hardware used.

The incorporation of new testing techniques and tactics are fundamental in order to efficiently test these systems and reduce the number of potential weaknesses which can be exploited.

The main system (hardware and software) testing techniques which are known can be grouped by several criteria:

- Static testing techniques, not requiring the execution of the program, such as: "informal review", "walkthroughs", "inspections", "technical review", static analysis (data flow, flow control).
- Dynamic testing techniques including, among others, the following subgroups:

  ○ Structure-based: "decision coverage", "statement coverage", "condition coverage", "multiple condition".
  ○ Experience-based: "error guessing", "exploratory testing"
  ○ Specification-based: "equivalence partitioning", "boundary value analysis", "decision tables", "use case testing", "state transitioning".

However, all the aforementioned testing methods assume full access to and knowledge of the system and its operation: which is referred to as white-box testing. All available system information must be used when performing this type of testing. In the case of hardware systems, access to all the source code is required. The main advantage of this type of test is that it is possible to analyze all the code, and it is therefore possible to know which portion of said code has been covered during execution, such that possible errors can be located and associated with a specific part of said code. Additionally, designing white-box testing in this situation allows designing tests which end up covering all the source code to be analyzed.

However, if the system is very complex, it is not always possible to resort to white-box testing. In such cases, there are two alternatives to white-box testing: gray-box testing and black-box testing.

Gray-box testing does not require full knowledge of the system. Having partial information about its operation is sufficient to perform this type of test. Its operation is similar to black-box testing where there is no prior information or full access, with the difference that, in this case, part of the internal operation is indeed known and access to the binary is possible at times. This is among the most widely used techniques today, since it is more efficient than black-box testing (which will be discussed below) and requires less information than white-box testing.

Black-box testing does not require any information about the internal operation of the system, nor access to the source code. This is its greatest advantage, although in return, it is less efficient as it is a blind testing. Furthermore, it is difficult to complete and estimate code coverage and it is more difficult to perform complex attacks.

Generally, system testing involves many resources in terms of time and costs (people, equipment, etc.), representing a very significant effort. As a result, testing is limited in time and in the number of tests. The purpose of the testing is to cover most of the code or functionality of the system so as to be able to thereby detect potential errors.

As a particularly critical case, testing in embedded systems should be highlighted. These systems must be able to comply with the relevant security regulations (for example, ISO/IEC 62443-4), but at the same time, they usually lack resources which facilitate the error debugging task therein. However, market needs require these embedded systems to be tested in the most efficient and automatic way possible, which can be complicated, depending on the resources available in the system to be tested and on the complexity of the functionality and interaction capability of said system.

Three major categories are often distinguished within embedded systems:

- Low-performance systems having a single core and a RAM memory with a capacity of less than 1 MB. They are characterized by not even having an operating system due to limitation of resources. Despite this, they are capable of completing simple tasks. Such systems do not usually have memory management units (MMUs) although some of them may have, as an exception, basic protection mechanisms (such as memory protection unit or MPU). Furthermore, these systems often suffer a severe limitation of interfaces for interacting with other devices. Unlike a standard system, such embedded systems do not have interfaces associated with keyboards, mouse, or other peripherals, nor do they have output interfaces (screen or console) where debugging processes can be performed. Furthermore, these tools do not provide great flexibility, complicating the automation of the testing process. It should be mentioned that the absence of an operating system causes the memory control and security mechanisms to be delegated to the development team of the embedded system in question, such that they must implement the necessary security controls. As a result, it pertains to the category of embedded systems in which the task of testing and detecting the exact moment in which errors occur is the most complicated and laborious. In summary, the absence of typical interaction interfaces along with the absence of security mechanisms further complicates both the testing process for low-performance systems and the detection of operation failures such as errors (bugs) in the source code.

- Medium-performance systems: They are systems having one or two cores and a RAM memory of between 1 MB and 1 GB. From the security viewpoint, many of them have an MMU but not an MPU. Such systems usually do have an operating system, but with limited capabilities adapted to be able to operate in particular hardware. Capability limitation does not only affect the standard functionalities of an operating system, but it also affects security services which do not always use the only memory management unit (MMU) that it has. As a result, despite having an operating system and being capable of executing more tasks than a low-performance system, the truth is they are not capable of reacting suitably when different kinds of errors occur. In other cases, despite having hardware resources, there is no operating system either. Like in low-performance systems, the testing process itself, as well as failure detection, is complicated.

- High-performance systems: They are systems having the most resources, particularly several cores, a RAM memory of more than 1 GB, and an MMU. These systems are characterized by having a complete operating system and are capable of performing more complex tasks, and they can even perform some tasks that are performed by general-purpose devices. Furthermore, the operating system provides support which, together with the hardware mechanisms, allow detecting more kinds of errors and the specific moment in which the errors occur. Moreover, given that such systems tend to interact with other elements or devices of the physical world, the preparation of a testing environment which can be moderately automated is complicated.

Therefore, embedded systems comprise software and hardware elements which must be protected so as to prevent vulnerabilities. The possibilities of testing said systems will be more or less limited depending on the performance and functionality of the aforementioned embedded systems (low-, medium-, or high-performance). In that sense, not all types of testing (white-box, gray-box, or black-box) are compatible with all types of embedded systems. White-box or gray-box testing can be applied in medium- and high-performance embedded systems (depending on the information available about said system) but cannot be applied in low-performance embedded systems, since its limitation of resources and its technical limitations makes it impossible to execute the techniques of this type of testing and the information offered by the embedded system is more limited.

In contrast, black-box analysis can be performed in any type of embedded system (including low-performance systems), since only the inputs and outputs of the system need to be known.

Therefore, limitation of resources means that it is more complicated to test low-performance embedded systems. In view of this situation, new testing strategies and techniques have been considered, with one of them standing out as a result of its effectiveness: fuzzing which allows test data sets to be generated and results to be collected automatically but in turn following a strategy.

Fuzzing is a testing technique which allows system failures, for example, software failures (or "bugs") to be detected by means of the generation of deliberately malformed input data patterns at the inputs of the system to be tested. It is understood that an input data pattern is malformed if it is a data pattern for which the system is not specifically designed or conceived; that is, the system designer has not taken said input pattern into account, and therefore the output is indefinite and may have, as a result, a system failure or even complete lock out. Then, by recording and analyzing the outputs of the system being tested, errors can be located, and the outputs of the system can be utilized to generate new input data patterns which can probably cause new errors in the system, and thus continue with its debugging. For example, by means of fuzzing, semiautomatic or automatic tests in which unexpected, invalid random data is provided to the system can be performed, and its response can thus be studied. In fuzzing, there must be a module responsible for monitoring the reaction of the test system based on the different erroneous inputs introduced therein and the main function of which is to search for errors and the impact these errors may have on the test system itself. Based on the errors, it is possible to determine which of these errors are critical and can be maliciously exploited by third parties. Fuzzing has spread to different fields, allowing the creation of a large variety of error debugging mechanisms.

In fuzzing, a system is tested, generating a large amount of possible input combinations that are, however, not necessarily valid, at least ideally, and introducing them in said system. If there are too many input parameters, it is not always possible to check all the possible combinations in order to verify if one of them generates erroneous operation in the tested system. For this reason, there is a need to opt for algorithms which choose subsets of the input space where errors are most likely. For example, if the system is an elevator with two input buttons to be actuated by a user, all the possible input combinations must be tested: pressing the first button, pressing the second button, pressing both buttons or none of them. If all these combinations produce controlled outputs, the testing will not have located vulnerabilities and it may be considered that the tested system is robust. However, (intentional or unintentional) improper uses by the user of the system must also be taken into account (for example, if there were several buttons, pressing many of them simultaneously within a short time span, etc.). If the user locates an input combination which generates an error in the system to be tested, vulnerability will have been successfully located, which is the purpose of fuzzing.

Today, the evolution of these fuzzing mechanisms focuses on improved input generation such that the maximum number of software failures or "bugs" can be detected by means of monitoring and analyzing different aspects of the process, such as the results, such that the analysis thereof allows the pattern generation system to be improved.

Therefore, there is technical challenge in the field of debugging embedded systems, particularly in the case of low-performance embedded systems in which black-box testing techniques are to be applied given that the known fuzzing-based systems are not applicable as they require a large capacity for observing the behavior of the device and the capacity for proposing new data patterns do not work, partly due to the absence of previous observation data. The apparatus of the invention disclosed in the present application solves said problem, but the use thereof is not limited to low-performance embedded systems, but rather it can be used in all types of systems having input and output ports.

## DESCRIPTION OF THE INVENTION

A first aspect of the present invention relates to an apparatus for identifying erroneous input conditions in a controller device, the controller device being adapted to process a plurality of input signals ($e_i$, $i = 1 \dots n$) and provide at least one output signal ($s_j$, $j = 1 \dots m$) when it is in the operating mode. The apparatus of the invention comprises:

- a plurality of output ports configured for providing input signals ($e_i$, $i = 1 \dots n$) to the controller device;
- a monitoring module adapted to measure at least one scalar estimator value ($f_n$) for an erroneous operating condition in the controller device when it is in the operating mode;
- a machine learning module which comprises a parameterizable numerical model representative of the device in an erroneous operating condition, adapted to provide a set of parameters ($v_i$, $i = 1 \dots n$), each parameter $v_i$ being representative of the value of an input signal $e_i$ candidate for causing an erroneous operating condition in the controller device, the machine learning module being configured to adopt:

    a first calibration operating mode in which the numerical model adjusts its parameters,
    a second estimation operating mode in which the numerical model performs sampling on the parameterizable numerical model and provides an output with the set of parameters ($v_i$, $i = 1 \dots n$), or input pattern, for the controller device;

- a central processing unit in communication with the machine learning module and in communication with the monitoring module, the central processing unit adapted to:

    a) set the machine learning module in the calibration operating mode and adjust its parameters to a set of pre-established initial values;

b) carry out an iterative process according to the following steps:

- setting the machine learning module in the estimation operating mode by providing an input pattern through the plurality of output ports at the input of the controller device keeping the monitoring module active and determining at least one scalar estimator value ($f_n$) for an erroneous operating condition in the controller device,
- setting the machine learning module in the calibration operating mode and adjusting its parameters according to the input values which have given rise to values of the scalar estimator value ($f_n$) for an erroneous operating condition that are greater than a given pre-established value,

with the iterative method being executed until the machine learning module has reached a pre-established adjustment condition;

c) provide the last input pattern with which the adjustment condition has been reached.

Advantageously, steps a)-c) define an iterative method executed by the central processing unit which allows locating erroneous operating modes of the controller device, that is, input patterns candidate for generating errors in said device. The apparatus provides, as an output after executing steps a)-c), a representative input pattern which has produced an error in the device. These steps a)-c) define what will be known hereinafter as "deep iteration", since as will be described in detail below, the central processing unit can also execute a "high-level iteration", which repeatedly calls "deep iteration" a nested loop.

Throughout this document, "adjustment condition" shall be understood as a logic or mathematical criterion which can be pre-established by one skilled in the art in order to determine when the provided input pattern is good enough, i.e., when it is a candidate with a high probability of generating an error in the controller device. By way of illustration, a valid adjustment condition could be one in which the parameters of the model do not vary or in which said variation is not significant in successive iterations of the deep iteration, which could prevent exploring other regions of the search space defined by ($v_i$, $i = 1 \dots n$). Another adjustment condition could be one in which a maximum number of iterations is reached with steps a)-c), or in which a high value of $f_n$ is achieved (exceeding a pre-established threshold). Alternatively, in the case where several input patterns which generate errors are located in areas in proximity to the space defined by ($v_i$, $i = 1 \dots n$), a maximum number of errors could be established as adjustment condition in order to stop deep iteration.

Throughout this document, distinction is made between input/output "signals" and input/output "parameters". Signals shall refer to the measurements which are recorded taking the apparatus or the controller device as the origin or destination. Signals shall include, among others, input signals and output signals ($e_i$, $s_i$, respectively), as well as other optional measurable output signals (power signal $s_p$ and electromagnetic emission signal $s_{EM}$) from the controller device. Moreover, parameters $v_i$ shall be values representative of the values of the input signals ($e_i$) of the controller device and be obtained by means of measuring respective input signals. The values are obtained from the corresponding signals, for example, through discretization operations (after analog/digital conversion) or another type of analog processing.

The central processing unit may comprise a computer (or other processing means) and is communicated with the plurality of output ports of the controller device, with the monitoring module, and with the machine learning module.

In the context of the present invention, it shall be considered that the controller device provides an output signal ($s_j$, $j = 1 \dots m$) when said controller device is configured to provide said output signals "directly" to the monitoring module of the apparatus in order to identify erroneous input conditions, or if it is configured to provide said one or more output signals ($s_j$, $j = 1 \dots m$) through an instrument, connector, or probe (i.e., connecting an instrument, sensor, and/or probe to the controller device in order to obtain output signals which cannot be directly obtained with said controller device). Lastly, the parameters ($v_i$, $i = 1 \dots n$) which serve as input to the controller device shall also be referred to as input data pattern throughout the document.

That is, it shall be considered that the present invention includes both the embodiments of the apparatus in which output signal(s) ($s_j$, $j = 1 \dots m$) of the controller device are introduced directly in the monitoring module (therefore, in which the controller device is directly connected or communicated with the monitoring module and provides output signals directly to said monitoring module) and those embodiments in which output signals are provided to the monitoring module through a measuring instrument, sensor, or probe (that is, in which the controller device is connected or communicated with said measuring instrument, sensor, and/or probe; and said measuring instrument, sensor, and/or probe is in turn connected or communicated with the apparatus of the invention).

Advantageously, the use of an external measuring instrument allows measuring output signals of the controller device which cannot be obtained from the logics or hardware of said controller device due to limitations thereof in terms of hardware or configuration. For example, if the controller device is a microcontroller without temperature sensors, and external measuring instruments are used to enable measuring the temperature of said microcontroller during the execution of instructions, this temperature information can be used to enrich the set of signals monitored with the apparatus of the invention and to facilitate the search for errors.

In the scope of the present invention, "numerical model" shall be understood as a mathematical or algorithmic model which is implemented in a computer or in another device with processing capacity, and which is optimized to perform the iteration and identification of parameters candidate for causing an erroneous operating condition in the controller device.

Advantageously, the apparatus of the invention serves for carrying out automated system vulnerability tests, understanding in the concept of "system" both physical devices (hardware) and programs (software). The apparatus of the invention is applied to a controller device having one or more inputs and outputs, such that the outputs of the controller device obtained in response to certain input patterns are used iteratively to feed input patterns generated in the apparatus of the invention back to said controller device, in order to reach a stop condition. In this way, the apparatus of the invention can be used in a real environment for testing a device or program, in which most of the executions will be correct and not generate errors.

The controller device with which the apparatus of the invention is used can be, for example, a microprocessor (Raspberry, Arduino, etc.), a programmable logic controller (PLC), an elevator, etc. In general, the controller device only needs to have inputs and outputs and to accept external inputs from the apparatus of the invention. Embedded systems, particularly medium- and low-performance embedded systems, which do not provide such an accurate response in response to the input patterns constitute a particular case of controller device. Sometimes, if the controller device (for example, an embedded system) breaks, it does not immediately report that an error may have occurred, rather it may continue to work thereafter and the effects of the error may even appear later, after some time has passed since the occurrence of the error. In this way, the error may appear even without being due to recent correct input patterns, as a late reaction due to a previously occurring input pattern. To that end, it is crucial for controller devices of this type to be able to detect when the error has occurred, even though the device is still apparently responding correctly. The detected failures can be software failures linked to hardware failures.

For example, a discrete numerical model may comprise input patterns tables, together with the output and a label indicating whether or not an error has occurred in the controller device. The advantage of said model is that it provides an explicit mathematical representation of which input patterns generate the errors in the controller device. With this model, the apparatus of the invention learns and gradually adjusts the parameters so as to produce input patterns that generate errors in the controller device. The operation of the apparatus of the invention is based on the hypothesis that close to an erroneous input pattern there may be other erroneous input patterns which produce errors in the controller device. Alternatively, soft mathematical models (for example, multidimensional Gaussian models) or models based on genetic or ant colony algorithms can be used. Therefore, the apparatus of the invention is not limited to a particular optimization heuristics.

Secondly, by subsequently putting the apparatus into operation in the second estimation operating mode the appearance of anomalies is expected for some of the new inputs: every time the controller device deviates from normal physical signal measurements, it is assumed that an error has occurred therein, with deviating being understood to mean a predefined distance that is greater than a pre-established threshold value. When the error occurs, the monitoring module identifies that an error condition has occurred, and the central processing unit stores both the measured values of the physical signal(s) and the measured values of the logic signal(s) of the controller device causing same, the inputs, which is very useful for studying unexpected errors.

These values allow having more samples in the new training phase, now with the scalar value associated with the error condition. As indicated by way of example, if the condition of the absence of an error is the binary value 0 and the error condition is the binary value 1, the first training phase with error-free operating conditions known as the design conditions of the device will all be 0 and the new error conditions will have a value of 1.

It should be pointed out that the apparatus of the invention overcomes a preconception existing in the state of the art: the fact that said apparatus can be trained originally only with values which do not generate erroneous operating modes in the controller device is not an obstacle for achieving error detection based on said training.

In a preferred embodiment of the apparatus, the parameterizable numerical model comprises a set of probability density functions for each parameter ($v_i$, $i = 1 \ldots n$).

In another even more preferred embodiment of the apparatus:

- the probability density functions of each of the parameters, with pre-established initial values, are uniform probability density functions in the range of values of said parameter;
- the probability density functions of each of the parameters, when adjustment parameters are present, is a Gaussian function wherein the adjustment parameters are the mean and variance or standard deviation.

In this way, the probability density functions of the parameters are initially uniform within a pre-established range (for example, this range can be set based on the prior knowledge of one skilled in the art) since it is assumed that all the values are equally likely, given the lack of more information. As learning occurs, the probability density functions are gradually adjusted to Gaussian functions, the mean and variance of which vary until an adjustment condition is reached, for example, until said Gaussian distribution becomes sufficiently "narrow" or "sharp" (with a variance below a value pre-established by the skilled person) around an input pattern which has generated an error in the controller device.

In another preferred embodiment of the apparatus of the invention, for each parameter ($v_i$, $i$ = 1 ... n), the mean and variance or the standard deviation, are evaluated based on the values of the parameter in all the iterations when the input pattern has given rise to values of the scalar estimator value ($f_n$) for an erroneous operating condition that are greater than the given pre-established value.

This scalar estimator value ($f_n$) can be preferably a scalar with intermediate values between two binary values, for example, between 0 and 1. By way of illustration, the value 0 can be assigned to those input patterns which have not generated the erroneous operating condition, whereas the value 1 can be assigned to those input patterns which indeed generate errors in the controller device. In this way, the larger the scalar estimator value, the more likely it can generate an error. However, $f_n$ can be normalized in another numerical or categorical range.

In another preferred embodiment of the apparatus of the invention, the central processing unit is further adapted to operate with a database storing at least the data provided by the monitoring module and the input pattern used for feeding the controller device while the monitoring module is kept active. In this embodiment, the monitoring module determines the scalar estimator value ($f_n$) for an erroneous operating condition from one or more of the following elements of the list:

- values of the logic signals of the controller device;
- values of the physical signals measured on the controller device;
- values of the distance between the values of the input pattern and values corresponding to input patterns representative of an erroneous operating condition.

In the context of this invention, logic (output) signals shall be understood as measurements in the outputs of the controller device, preferably through communication ports or lines, and they are determined mainly by the software of the controller device. These logic signals are associated with the behavior for which they are programmed. In turn, physical (output) signals are linked to the hardware of the controller device (for example, electromagnetic signal readings from the processor of the embedded system, power consumption measurements, temperature measurements, etc.). Physical signals contribute to the detection of changes in the operation of the embedded system, since these physical signals of the tested system vary depending on whether the system is operating normally or is in an abnormal operating mode (for example, if the controller device is trapped in an interminable loop, it can cause its processor to overheat). To that end, they are very useful particularly in embedded systems in which an error condition cannot always be provided due to limitations of the hardware of said embedded system. By way of illustration, in the case where the controller device is an elevator, logic outputs or responses could be the level to which the user goes and whether or not the elevator door opens; whereas power consumption, delayed opening of the elevator door, an electromagnetic signal captured from a microprocessor of said elevator, etc., could be considered physical signals.

Likewise, the particular definition of "distance" used in this specific embodiment of the apparatus depends on the criterion of the person skilled in the art who intends to execute the invention. Said distance is defined in the coordinates of the space of the values measured by the monitoring module from the tests performed on the controller device. In preferred embodiments of the apparatus of the invention, Euclidean distance, Manhattan distance, Minkowski distance, etc., can be used.

Advantageously, the central processing unit is furthermore connected to the database for storing data from previous tests performed on the controller device, which data is used in the training of the numerical model in order to guide the apparatus of the invention towards the search for new input patterns candidate for promoting the appearance of errors in the tested controller device.

For example, the database can belong to the central processing unit or be integrated in the machine learning module (by way of cache memory). It can also be a database distributed among several elements of the apparatus of the invention.

In another embodiment of the apparatus of the invention, values corresponding to an input pattern representative of an erroneous operating condition are the centroid of a cluster, wherein said cluster is obtained by means of a clustering method evaluated on the data stored in the database and the clustering condition depends on the scalar estimator value ($f_n$) for an erroneous operating condition.

Another preferred embodiment of the apparatus of the invention carries out the following steps:

- initially activating the database without values;
- carrying out an iterative process to search for input patterns which verify the erroneous operating condition according to the following sub-steps:

    carrying out the iterative method which comprises steps a) to c) storing in the database at least the values of the data patterns of each iteration, the scalar estimator value ($f_n$) for an erroneous operating condition, the values of the logic signals of the controller device, the values of the physical signals measured on the controller device, carrying out a clustering process with the data stored in the database in order to condition the calculation of the distances between the values of the input pattern and values corresponding to input patterns representative of an erroneous operating condition.

This embodiment defines the "high-level iteration" introduced above. "Deep iteration" allows erroneous conditions of the controller device to be located. However, once a possible input pattern candidate for generating an error in the controller device has been located, the numerical model of the machine learning module would tend to continue with learning and **generate** new possible input patterns that are always close to the pattern which has generated the error (the concept "close" being understood to be those input patterns which fall below a pre-established distance of the pattern generating the error). Transition from deep iteration to high-level iteration will occur when the numerical model can no longer be further optimized and it is interpreted that a failure has been identified (for example, when the new input patterns proposed by the model fail to improve the scalar estimator value of their predecessors).

For example, if the numerical model consists of a multidimensional Gaussian for the different parameters ($v_i$, $i = 1 ... n$), then once an input pattern generating an error in the controller device has been located, the parameters of said numerical model (in this case, mean and variance) would be gradually adjusted in order to surround said erroneous input pattern. This would perhaps allow other input patterns promoting an error in the controller device to be located, but there would come a time in which, after successive iterations, the adjustment will remain "trapped" or stabilized in a particular region (which will serve to define a new cluster), and therefore would not allow exploring other regions of the search space defined by the parameters measured by the monitoring device ($v_i$, $i = 1 ... n$) which were far away from the region where the input patterns candidate for generating errors have been found.

To prevent the preceding problem, "high-level iteration" can be executed once steps a)-c) have been executed and the adjustment condition has been reached. In this case, a "reset" occurs and the process starts again initially from the database without values. Since the process is random, high-level iteration may converge in another completely different region of the search space ($v_i$, $i = 1 ... n$), away from the region of the input pattern which had previously generated the error, and said space can thereby be explored more completely.

To prevent the loss of the already explored values when starting a new high-level iteration again, the central processing unit of the apparatus can store a history of the input patterns already tested in the controller device, as well as data relating to same which is computed during the clustering operation. For example, if several input patterns generating very high values of the scalar estimator value have been found in a deep iteration, then said patterns can be used in future deep iterations to readjust the parameters of the numerical model.

In a preferred embodiment of the apparatus of the invention, the machine learning module is in the first calibration operating mode and the parameterizable numerical model has not yet been calibrated. In this embodiment, the monitoring module is further adapted to read logic output signals and to measure the physical signals of the device in the controller device; and the apparatus is further adapted to:

- activate the monitoring module;
- provide an input data pattern ($v_i$, $i = 1 ... n$) generating in the plurality of output ports input signals which are introduced in the controller device;
- collect, through the monitoring module, the logic output signals and physical signals of the controller device resulting from the execution of the input data pattern;
- estimate the maximum execution time of the controller device;
- cluster each of the signals collected by the monitoring module forming at least one cluster.

In the first calibration operating mode, the machine learning module must be initialized and its numerical model adjusted with parameters associated with a plurality of input patterns which do not generate erroneous operating modes in the controller device. For example, a plurality of input patterns corresponding to a correct operation of the controller device can be introduced, and the maximum execution time of said pattern can be measured for each of them, together with the measurement of the different physical and logic signals which may be provided by the controller device. Based on all of said information (physical and logic signal measurements, as well as the maximum execution time), the monitoring module defines the cluster in a coordinate space by means of processing said information, such that the cluster is representative of a correct operation of the controller device. Once the cluster has been obtained, a new input pattern can be introduced in the controller device, and the (physical and logic) outputs and maximum response time of the controller device in response to same can be measured. Then, the same processing is applied to said new input pattern to define a point in the same coordinate space of the cluster. Lastly, a distance between said point and the cluster can be measured, such that said distance is representative of the probability of generating an erroneous operating mode in the controller device (if it deviates too much from the cluster representing the safe operating mode, it is possible for an error to be generated in said device).

It should be mentioned that estimating the maximum response time of the controller device in correct operation conditions is relevant because it allows determining situations in which the response time of said controller device is exceeded, which would indicate that the device is no longer working well (for example, it has been trapped in an interminable sequence of instructions or experiences an "overflow"). In this case, it may not be necessary to continue recording signals coming from the device and the apparatus can optionally opt to discard said signals or, where applicable, to stop the execution and emit a type of notification.

The estimation of the response time can be determined by an internal clock of the apparatus of the invention, an internal clock of the controller device, or by the clock of another external reference device.

In another even more preferred embodiment, the apparatus of the invention according to the preceding embodiment is further adapted to, after having determined the maximum execution time of the controller device:

- collect, through the monitoring module, the logic output signals and physical signals of the controller device for an execution time equal to the maximum execution time with the controller device not receiving input signals;
- cluster each of the signals collected by the monitoring module forming at least a second cluster for each output measured in the controller device.

In this way, in addition to having a cluster representative of the correct operation of the controller device, a second cluster representative of the standby mode of the controller device, in which no input pattern is being introduced in said device, can be generated. Advantageously, this allows differentiating at least two valid operating modes of the controller device (operating correctly without errors or in standby, not receiving input patterns). In this way, any behavior which deviates excessively from said two operating modes will have a high probability of corresponding with an erroneous operating mode of the controller device.

In other embodiments of the apparatus of the invention, calculations of the monitoring module are performed in the central processing unit. Advantageously, this allows all the calculations to be centered in the central processing unit, simplifying the computing requirements of the monitoring module.

In a preferred embodiment of the apparatus of the invention, the monitoring module is adapted to:

- measure the difference between the at least one output signal ($s_j$, $j = 1 \dots m$) provided by the controller device and an expected pre-established output signal value, and provide a value representative of the error associated with the difference as a scalar estimator value ($f_n$) for an erroneous operating condition; or
- measure a power consumption value of the controller device, compare the power consumption pattern measured with a reference pattern representative of a pre-established non-erroneous operating mode, and provide a value representative of the difference between both patterns as a scalar estimator value ($f_n$) for an erroneous operating condition; or
- measure a response time value of the controller device, compare the response time pattern measured with a reference pattern representative of a pre-established non-erroneous operating mode, and provide a value representative of the difference between both patterns as a scalar estimator value ($f_n$) for an erroneous operating condition; or
- measure an electromagnetic emission value of the controller device, compare the emission pattern measured with a reference pattern representative of a pre-established non-erroneous operating mode, and provide a value representative of the difference between both patterns as a scalar estimator value ($f_n$) for an erroneous operating condition; or
- carry out a combination of any of the preceding measurements and provide a scalar estimator value ($f_n$) for an erroneous operating condition resulting from the contribution of any of the preceding corresponding scalar estimator values ($f_n$) for an erroneous operating condition.

Often, the physical signal emission variability of the controller device (for example, an electromagnetic signal E/M or a power consumption measurement) must be suitably characterized during a correct operating mode of said controller device, given that the apparatus of the invention will subsequently identify relevant changes of said physical signals in response to changes of the inputs introduced in said controller device and/or possible errors. It is assumed that physical signal(s) (electromagnetic signals, etc.) hardly vary or that the apparatus of the invention is suitably trained so that the machine learning module learns the common variability or typical patterns of said physical signals when everything is going well and the controller device works without errors.

In another even more preferred embodiment of the apparatus of the invention described above, the monitoring module is further adapted to:

- measure a temperature value of the controller device, compare the temperature pattern measured with a reference pattern representative of a pre-established non-erroneous operating mode, and provide a value representative of the difference between both patterns as a scalar estimator value ($f_n$) for an erroneous operating condition; or

- measure an acoustic signal value of the controller device, compare the acoustic signal pattern measured with a reference pattern representative of a pre-established non-erroneous operating mode, and provide a value representative of the difference between both patterns as a scalar estimator value ($f_n$) for an erroneous operating condition; or

- carry out a combination of any of the preceding measurements (temperature signals, acoustic signal) and/or of the measurement of the preceding embodiment (the difference between the at least one output signal provided by the controller device and an expected pre-established output signal value, power consumption, response time, electromagnetic emission value) and provide a scalar estimator value ($f_n$) for an erroneous operating condition resulting from the contribution of any of the corresponding scalar estimator values ($f_n$) for an erroneous operating condition.

Advantageously, in certain specific examples of the apparatus of the invention, the monitoring module can be connected or communicated with a measuring instrument (such as an oscilloscope), probe, or connector which is in turn connected to the controller device through a serial port of this device and records output signals (such as power and electromagnetic emission signals) coming from said controller device. In this way, output signals which cannot be measured directly with the controller device due to hardware/software limitations thereof (for example, due to the lack of certain sensors or to limited processing capacity) can be obtained. These output signal measurements can be combined (for example, by weighing them and giving the power signal, which tends to be less noisy, a greater weight) to obtain the scalar estimator value ($f_n$). Ideally, the higher the value thereof, the more the controller device deviates from a non-erroneous mode and a standby mode, which is indicative of the possibility of an error occurring in said controller device.

In an even more preferred embodiment of the apparatus of the invention, the data stored for each test performed further comprises at least one element from the following list:

- measurements of the output signals ($s_j$, $j = 1 \ldots m$) of the controller device;
- measurement of the power consumption of the controller device;
- measurement of the electromagnetic signals emitted by the controller device;
- measurement of the response time of the controller device;
- measurement of the temperature of the controller device;
- measurement of an acoustic signal of the controller device;
- a combination of two or more of the above.

For example, if the controller device is a microcontroller, by combining information relating to electromagnetic signals and temperature, a correlation between the operating mode of the device and both measured values can be obtained, which temperature may even correspond to an overheating situation and the emitted electromagnetic signal. In that sense, if it is observed that the processor of the microcontroller has a temperature greatly exceeding the normal temperature, for example, it is most likely that the processor is experiencing an error. The electromagnetic signal measured in this case may help to establish a clear correlation and to thereby locate future errors. Both measurements will be separate output signals which will be monitored by the monitoring module and intervene in the learning of the numerical model.

In another preferred embodiment of the apparatus of the invention, the central processing unit is further adapted to carry out a clustering operation (clusterization) of the stored data, with the cluster being in a search space the coordinates of which are the measurements of the monitoring module, and to identify those clusters corresponding to non-erroneous operating modes. Then, data which deviates as far as possible from these clusters corresponding to correct operating modes will preferably be selected, since the purpose of the apparatus is to explore the search space in those regions that are as far as possible from those valid operating modes, and even more preferably, to explore regions of the search space which may not have been previously analyzed.

In another preferred embodiment of the apparatus of the invention, wherein all or part of the set of measurement parameters of the monitoring module is obtained by means of a time sampling of the at least one output signal ($s_j$, $j = 1 \ldots m$) provided by the controller device, caused by all or part of the input parameters ($e_i$, $i = 1 \ldots n$), and wherein the search space is a multidimensional hyperspace defined at least from said set of measurement parameters ($v_i$, $i = 1 \ldots n$) of the monitoring module in the time domain.

For example, representing the measurement parameters of the monitoring module in the time domain allows capturing information of the order in which instructions are executed in the controller device being tested. To that end, this time representation is good for locating anomalies in the execution of a program in said controller device. Another type of information which is well collected in the time domain is the emission of error signals by the controller device, for example, by means of the value of a sensor (either a sensor integrated in said controller device or an external sensor connected to the controller device), which can be modeled as step functions, wherein each step would correspond to the occurrence of an error.

In an alternative embodiment of the apparatus of the invention, the at least one output signal ($s_j$, $j = 1 \dots m$) provided by the controller device, caused by all or part of the input parameters ($e_i$, $i = 1 \dots n$), is transformed by means of a mathematical transformation executed by the central processing unit on the time sampling of the at least one output signal ($s_j$, $j = 1 \dots m$). In this embodiment, the search space is an expanded multidimensional hyperspace which comprises the set of measurement parameters of the monitoring module in the time domain and said transformed set of measurement parameters of the monitoring module.

Advantageously, the original search space defined from the measurement parameters of the monitoring module in the time domain can be increased by considering an expanded space, which also incorporates parameters obtained from the transformation of the measurement parameters of the monitoring module. This allows additional information which is not present in the time domain to be obtained. In other words, the transformed domain does not replace the anti-transform domain, in this case the time domain, but they are both part of the data of the search hyperspace. In this embodiment, the distance between the clusters and the different input patterns introduced in the controller device is measured in the coordinates of the expanded space of measured values with the transformed data.

In an even more preferred embodiment of the apparatus of the invention, the mathematical transformation is one from the following list:

- Fourier transform;
- wavelet transform;
- discrete cosine transform;
- a combination of two or more of the preceding transforms.

For example, every time an instruction is executed in the processor of a controller device, an effort is generated in the electronics (hardware) of the device, which can be detected as power or electromagnetic emission peaks in the frequency domain. To that end, expanding the information of the time domain with input parameters transformed in the frequency domain (by means of Fourier transform) allows capturing more complete information as it allows information of said energy peaks to be combined with time information (which gives an idea of the order in which instructions are executed). The use of frequency domain is useful when a certain type of measurements of the controller device (consumption power, electromagnetic emissions) is available. Another case is wavelet transform, which allows working with time and frequency information of the input parameters simultaneously. Wavelet transform increases the dimensions of the parameter search space without losing information. Clusterization will be carried out in this expanded search space.

In another preferred embodiment of the apparatus of the invention, the random sampling of the numerical model of the machine learning module is carried out taking into consideration sampling of a distribution comprised in the following list:

- a probability distribution with continuous input values if the input value is continuous;
- a probability distribution with discrete (or categorical) input values if the input value is discrete;
- a probability distribution with mixed input values formed by a combination of two or more of the preceding distributions if the input values are mixed.

In another preferred embodiment of the apparatus of the invention, the central processing unit is adapted to carry out a dimensionality reduction technique on the sets of input parameters already used by the monitoring module, and wherein the dimensionality reduction technique must preserve at least one pre-established value of the information of said input parameters. Preferably, this pre-established value of the information is set in the dimensionality reduction technique in order to preserve at least 95% of the information (variability) of the input parameters. The pre-established value of the information can be decided automatically, or can be set beforehand by one skilled in the art. In this embodiment, the distance between the clusters and the measurements of the controller device is measured in the coordinates of the reduced space of the measurement parameters of the monitoring module.

In another even more preferred embodiment of the apparatus of the invention, the dimensionality reduction technique comprises at least one element from the following list:

- a principal component analysis (PCA);
- a non-negative matrix factorization (NMF);
- a linear discriminant analysis (LDA);
- a generalized discriminant analysis (GDA).
- a low-variance filter;
- a high-correlation filter;
- autoencoders;

- a combination of two or more of the above.

The application of dimensionality reduction techniques allows compressing the information of the input parameters for the monitoring module in a search space of smaller dimensions, which speeds up the processing that the apparatus must perform in search of new input patterns.

In another preferred embodiment of the apparatus of the invention, the numerical model comprises a probabilistic graphical model and/or a neural network.

Advantageously, the probabilistic graphical model allows the numerical model to readily represent both those cases in which the parameters ($v_i$, $i$ = 1 ... $n$) are independent variables with respect to one another (therefore, they will be represented in a graph as nodes which are not connected to one another) and other cases in which part or all of said parameters are interdependent (in which case they will be represented in the graph as connected nodes). Similarly, the neural network allows great flexibility, where the number of neuron layers of said network can be modified or feedback can be introduced between some of the layers in order to consider interdependencies between variables. Said interdependences can be known *a priori* or determined based on a statistical analysis.

In another preferred embodiment of the apparatus of the invention, wherein the central processing unit is configured for receiving a mathematical transformation selection signal, wherein a value of said mathematical transformation selection signal selects the mathematical transformation which the central processing unit executes on the time sampling of the input signals ($e_i$, $i$ = 1 ... $n$).

In certain embodiments of the apparatus of the invention, the clustering algorithm comprises an element from the following list:

- density-based spatial clustering of applications with noise, DBSCAN;
- OPTICS (Ordering Points To Identify the Clustering Structure) multiscale algorithm;
- support-vector machines;
- expectation-maximization algorithm;
- Gaussian mixtures;
- agglomerative hierarchical clustering;
- balanced iterative reducing and clustering using hierarchies (BIRCH);
- affinity propagation algorithm;
- mean shift algorithm;
- k-nearest neighbors;
- algorithms based on centroid calculation, preferably k-means.
- linear regressions;
- a combination of two or more of the above.

It should be pointed out that regardless of the clustering algorithm used, said algorithm must preferably be adapted so as not to impose the number of clusters to be generated *a priori,* in order to prevent operation bias in the apparatus.

A second aspect of the invention relates to a system which comprises:

- the apparatus according to any of the preceding embodiments;
- a controller device communicated with the apparatus and adapted to process a plurality of input signals ($e_i$, $i$ = 1 ... $n$) and provide at least one output signal ($s_j$, $j$ = 1 ... $m$) when it is in the operating mode;

wherein the controller device further provides an output synchronization signal which is configured for activating the apparatus and putting it in the operating mode.

Advantageously, the apparatus and the system of the invention are suitable for testing all types of embedded systems. Furthermore, it is particularly suitable for testing low-performance systems by means of black-box testing, which cannot be tested with other devices known in the state of the art.

In preferred embodiments of the system of the invention, said system further comprises a measuring instrument, connector, and/or probe, communicated both with the controller device and with the apparatus of the invention (through any type of known wired or wireless connection), configured for obtaining new output signals which cannot be obtained directly according to the logic or the hardware of said controller device and for providing said new output signals to the apparatus, when the apparatus is in the operating mode. For example, said new output signals can be power and/or electromagnetic emission measurements.

In even more preferred embodiments of the system of the invention, said system further comprises a viewing and/or signal acquisition instrument, and the measuring instrument, connector, and/or probe is communicated with the apparatus of the invention through the viewing and/or signal acquisition instrument. For example, said measuring instrument may comprise an oscilloscope, on the screen of which the new output signals of the controller device which are measured can be seen, which measuring instrument has the functionality of acquiring and storing signals to be forwarded to the apparatus of the invention.

All the features described in this application (including the claims, description, and drawings) can be combined in any combination, with the exception of combinations of such mutually exclusive features.

## DESCRIPTION OF THE DRAWINGS

These and other features and advantages of the invention will be shown more clearly based on the following detailed description of a preferred embodiment, provided solely by way of illustrative and non-limiting example in reference to the attached figures.

Figure 1 shows a schematic diagram of an embodiment of the system of the invention, which comprises the claimed apparatus.

Figure 2 shows a schematic diagram of another embodiment of the system of the invention, including in greater detail the submodules making up the apparatus and their interconnections.

Figure 3 shows a specific embodiment of the system of the invention, in which the controller device is connected to an instrument or probe for measuring a plurality of physical signals which cannot be directly obtained by the controller device.

Figure 4 shows an example of how distances from an input pattern to the representative clusters of the correct operating mode (cluster 1) and the standby mode of the controller device (cluster 2) are measured.

Figure 5 shows a specific embodiment of the system of the invention.

Figure 6 shows the non-parameterized initial model according to an example of use of an embodiment of the system of the invention.

Figure 7 illustrates the model that has learned based on normal distributions for the variables ($v_1$, ..., $v_5$).

## DETAILED DESCRIPTION OF THE INVENTION

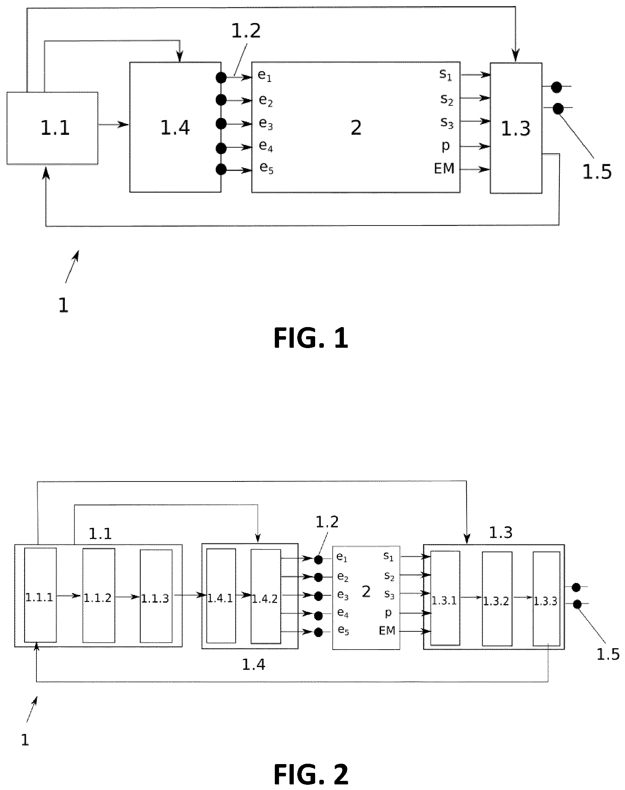

A particular embodiment of the system object of the present invention is described below, with particular emphasis on the use thereof for automatic testing in the worst conditions possible, i.e., with a black-box strategy and taking into consideration a controller device (2) which is a low-performance embedded system. Said preferred embodiment of the system, illustrated in Figure 1, comprises an apparatus (1) connected to a controller device (2), and said apparatus (1) in turn comprises:

- A central processing unit (1.1), connected in a wired and/or wireless manner to a monitoring module (1.3) and to a machine learning module (1.4), and it is responsible for controlling, as a whole, the operation of the apparatus (1). This machine learning module (1.4) comprises a numerical model.
- A plurality of output ports (1.2), connecting the central processing unit (1.1) of the apparatus (1) and the controller device (2) and defining the five input signals $e_1$, $e_2$, $e_3$, $e_4$, $e_5$.

- The monitoring module (1.3), responsible for acquiring output signals of the controller device (2) and then conditioning and converting them into suitable numerical values. Said monitoring module (1.3) records the different physical and logic outputs of the controller device (2), which comprise logic output signals $s_1$, $s_2$, $s_3$, determined by the logic operation of the controller device, as well as other outputs, such as physical power (p) and electromagnetic emission (EM) signals. The monitoring module (1.3) has as operating parameters a sampling time and a maximum capture time (if said time is exceeded and no signal leaves the controller device (2), a type of notification is recorded in the monitoring module (1.3)).
- The machine learning module (1.4), which is configured from a numerical model the response of which depends on adjustable internal parameters when it is in the learning mode operatively, and it is capable of providing output values from the information collected about data patterns/inputs provided thereto. The numerical model is reinforced iteratively with obtained input patterns and observations such that its error prediction capacity improves as the test process progresses.

- Optionally, in the embodiment illustrated in Figure 1, the monitoring module (1.3) comprises one or more output ports (1.5) for measuring the values obtained from the physical or logic output signals of the controller device (2) and sending them to other external devices. In other specific embodiments of the invention, these output ports (1.5) are connected a different sensors or external devices.

In turn, according to another embodiment of the invention (see Figure 2), the functionality of the preceding elements is subdivided into different submodules.

- The central processing unit (1.1) comprises a database submodule (1.1.1) in which there are stored the numerical values which have been used during the tests performed on the controller device (2) and which have been acquired by the monitoring module (1.3), at least the corresponding values comprising at least the input parameter values ($v_i$, $i$ = 1 ... $n$) which correspond to a specific input pattern and the corresponding scalar estimator value ($f_n$). Optionally, numerical values corresponding to physical signals (power, electromagnetic emission, etc.) can be stored if they have been acquired. Furthermore, the central processing unit (1.1) comprises a data ordering submodule (1.1.2) which evaluates each of the data vectors (possible input patterns to be tested in the controller device) to obtain a single numerical value (the scalar estimator value for the error) for subsequently ordering them based on said value; and a selection submodule (1.1.3) which selects the data obtained as output of the data ordering submodule (1.1.2) according to a predetermined policy a subset of the data ordered from best (the largest scalar estimator value) to worst for which they are subsequently used during the testing phase.
- The machine learning module (1.4) in turn comprises a learning submodule (1.4.1), which comprises the numerical model and is connected to the central processing unit (1.1) to allow information to be exchanged and model to be updated based on the generated input patterns and the results obtained in previous tests on the controller device (2); and a sampling submodule (1.4.2) for the input patterns. The machine learning module (1.4) has two operating modes:

  ◦ a first calibration operating mode in which the numerical model of the learning submodule (1.4.1) adjusts its parameters, and
  o a second estimation operating mode in which the numerical model performs sampling on the parameterizable numerical model and provides an output with the set of parameters ($v_i$, $i$ = 1 ... $n$), or input pattern, for the controller device (2).

  The learning submodule (1.4.1) is connected to the sampling submodule (1.4.2) which is in turn configured for generating all the input patterns candidate in deep iteration.
- The monitoring module (1.3) comprises the following elements: a signal acquisition submodule (1.3.1) which works by acquiring physical and logic signals of the controller device (2) according to certain parameters, such as maximum capture time, sampling time, and the values of output signals $s_1$, $s_2$, $s_3$ of the controller device (2); and a signal processing submodule (1.3.2) responsible for processing the output signals of the controller device (2), i.e., $s_1$, $s_2$, $s_3$, p, EM, which have been acquired by the signal acquisition submodule (1.3.1), adapting their format, and returning a set of parameter values after processing said signals by means of machine learning algorithms, neural networks, mathematical transformations, etc.

It should be mentioned that the monitoring module (1.3) can use not only the values or measurements of the "logic" " outputs provided by the tested controller device (2) (in this case, signals $s_1$, $s_2$, $s_3$) as inputs, but also the values or measurements of its "physical" outputs (in this case, power and electromagnetism signals; as well as an indication of whether the embedded system is locked out, which can be obtained from evaluating the response time and observing whether the maximum response time in a non-erroneous operation has been exceeded). Optionally, the apparatus (1) can have screens or sensors to display a certain error in detail. In the case where the monitoring module (1.3) uses both types of (logic and physical) outputs, said monitoring module (1.3) further comprises a data aggregation submodule (1.3.3) which receives parameter values from the signal processing submodule (1.3.2) processing both types of signals, performs the aggregation (combination) of said values, and sends them to the central processing unit (1.1), particularly to the database submodule (1.1.1), for subsequent use in the feedback of the machine learning module (1.4).

Advantageously, as a result of the consideration of not only the physical outputs but also the logic outputs which are provided by the controller device (2) (and serve as inputs for the apparatus (1) object of the present invention), not only the presence or absence of an erroneous operating mode in said controller device (2) can be identified, rather said erroneous operating mode can also be classified according to its origin, or different errors, such as arithmetic errors ("overflow", division by cero, etc.) or memory access errors (segmentation failures, lack of memory, etc.) can at least be distinguished. For example, indicating a mere segmentation failure is not very informative for the user. However, as a result of the inclusion of physical signal information, classification techniques can be applied subsequently, for example, by means of unsupervised learning (clustering, etc.), and logic information (segmentation failures, memory failures, etc.) can be correlated with fluctuations of the physical signals with respect to their normal values at standby or during a correct operation of the controller device (2). In other specific embodiments of the invention, clustering is applied only to the physical signals of the controller device (2) (both to the measurements of the calibration performed prior to the first test and to the measurements which are being measured during the operation thereof).

The two operating modes of the machine learning module (1.4) will be described in greater detail below according to the system of Figure 2.

First, only the sampling submodule (1.4.2) intervenes in the first calibration operating mode, and not the learning submodule (1.4.1). Said learning submodule (1.4.1), specifically its numerical model, will have pre-established default values. In other words, in this first calibration operating mode, data from the database (including known input patterns which provide non-erroneous outputs in the controller device) is received directly in the sampling submodule (1.4.2). Therefore, in this first operating mode, only said known input patterns (valid inputs) are dumped into the controller device.

This first set of valid input patterns (which do not generate an error) are introduced in the controller device (2), and the signal acquisition submodule (1.3.1) of the monitoring module (1.3) acquires the different (physical and logic) outputs and the maximum execution time of said patterns in the controller device. This process will serve as a first training for the numerical model and is intended for incorporating information about different physical output signals of the controller device (2) (electromagnetic signals, power, time, etc.) therein; the information to be obtained include, among others: characterization of the normal behavior of the controller device (2)), estimation of the maximum energy of the signal associated with the physical output when the controller device (2) is in a correct operation, or estimation of the maximum duration and the maximum energy of the physical signals. In this first training, estimation of continuous sampling intervals, that is, the time which the signal acquisition submodule (1.3.1) must spend acquiring different signals of the controller device (2) without interruption, is executed. This sampling time will also allow calculating the maximum response time of the controller device (2), which will be highly relevant for the second evaluation operating mode. For the estimation of the maximum response time, different techniques will be used such as: individual valley analysis (consisting of analyzing the signals obtained in the first set of tests and determining the widest operating intervals at low energy similar to when it is not operating) or cumulative valley analysis (in which the duration of the widest low-energy valleys from all the signals obtained will be added up).

A second training of the numerical model is executed based on the data obtained from the first training and comprises obtaining physical signals when the controller device (2) is not operating (logically, in this case, the controller device (2) does not provide any logic output) during the maximum time period estimated in the first training.

Based on the data from the first training, the signal processing submodule (1.3.2) obtains a first cluster in the space defined by the measurement coordinates of the monitoring device (1.3) which represents the operation of the controller device (2) without erroneous conditions. In the measurement coordinate space of the monitoring device (1.3), each input pattern constitutes a point (in this case it is assumed that the large black point represents an input pattern). The centroid of this first cluster is used as reference to measure the distance from each of the input patterns ($v_1$, $v_2$, $v_3$, $v_4$, $v_5$) to said centroid.

Moreover, as a result of the second training, the signal processing submodule (1.3.2) generates a second cluster representative of the standby space of the controller device (2). The second cluster is also represented by a centroid, which will be used to measure distances from the different input patterns, which are being evaluated, to said centroid.

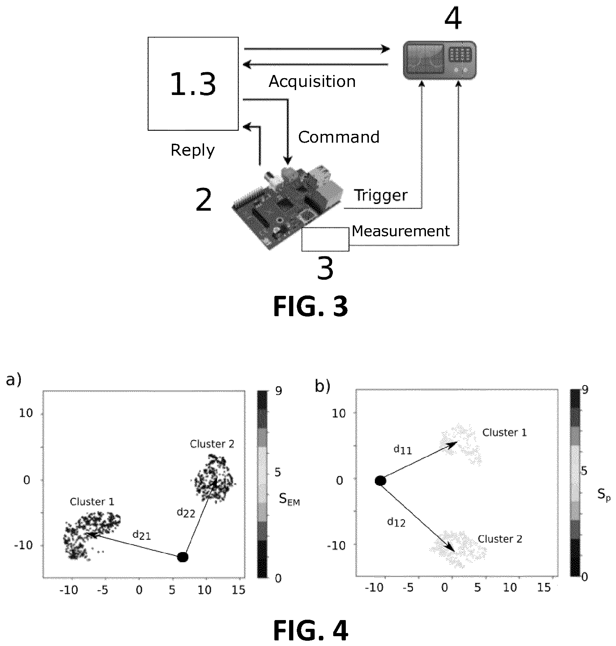

The two centroids of the preceding clusters are used as reference to measure distances from each of the input patterns ($v_1$, $v_2$, $v_3$, $v_4$, $v_5$) to said centroids. By way of example, Figure 4 shows a two-dimensional subset of the search space (i.e., only $v_1$ and $v_2$ are shown), in which both the values of the electromagnetic emission signal (Figure 4a), denoted by $s_{EM}$) and the values of the power signal (Figure 4b), denoted by $s_P$) are represented. The large point in Figures 4a) and b) denotes an input pattern which is evaluated in a single time instant, i.e., for which the distance with respect to the first cluster and the second cluster, respectively, is measured both in EM values and in power values. In this case, in Figure 4a), distances $d_{21}$ and $d_{22}$ correspond to the distances from the input pattern (represented by its $s_{EM}$ value) to clusters 1 and 2, respectively. Similarly, in Figure 4b), distances $d_{11}$ and $d_{22}$ are measured from the input pattern (represented by its $s_P$ value) to clusters 1 and 2, respectively. Said distances are added to a value table which comprises the input patterns, and for each of said input values, the physical and logic outputs of the device, as well as the distances to the two centroids mentioned above, and response times.

In this embodiment, the clustering process (clusterization) is carried out directly in the space given by the coordinates of the measurements of the monitoring device (1.3). In other words, both the EM signal and the power signal which are being acquired exhibit a time dependence, but each value of said time signals is interpreted as a component of the vector in the search space, so distances from each signal to a centroid can be measured.

However, in other cases, mathematical transformation and dimensionality reduction techniques can be applied prior to the clusterization process. These mathematical transformation and dimensionality reduction techniques are applied separately to the different physical signals, and the search space is defined by the original coordinates and the transformed coordinates of the measurements of the monitoring device (1.3).

Lastly, the values of the table generated in the signal processing submodule (1.3.2) are subjected to an aggregation process in the aggregation submodule (1.3.3) in order to generate a set of measurements of the monitoring device (1.3). This latter aggregation submodule (1.3.3) is adapted to combine (perform the aggregation of) the data of the table as a single scalar estimator value ($f_n$) representative of each input pattern ($v_1$, $v_2$, $v_3$, $v_4$, $v_5$). This table comprises measurements which are subsequently sent to the central processing unit (1.1), specifically fed back to the database submodule (1.1.1). Said aggregation may comprise, for each candidate pattern, a weighted sum operation of both types of (physical and logic) measurements and of the distances to the different clusters and additional information (response times, etc.), depending on the relevance or relative importance assigned thereto by one skilled in the art based on a pre-established criterion or prior knowledge about the controller device (2).

The two reference clusters generated in the first calibration operating mode of the apparatus (1) will be used in the second estimation operating mode to calculate the distances of the new input patterns proposed by the apparatus of the invention.

Moreover, the second estimation operating mode in which the numerical model performs sampling on the parameterizable numerical model and provides an output with the set of parameters ($v_i$, $i = 1 ... n$), or input pattern, for the controller device (2). In this mode, the following steps are executed:

2.1 In the learning submodule (1.4.1), the numerical model which comprises, for example, uniform distributions for all the parameters of said model when the variables thereof are continuous, is initialized. In the event of categorical variables, the numerical model would start from a state in which all the possible values of the different parameters are equiprobable.

2.2 The sampling submodule (1.4.2) performs sampling on the numerical model of the learning submodule (1.4.1) to generate all the candidate input patterns and then said candidate patterns are sent sequentially to the controller device (2) through the plurality of output ports (1.2) for testing. Since the input patterns are sent sequentially, the specific sampling time during the first calibration operating mode should be taken into consideration in order to suitably synchronize same, to space out the sending of patterns sufficiently, and to prevent sending a new pattern until the outputs of the controller device caused by a previous pattern have been measured.

2.3 As the input patterns candidate for said controller device (2) are tested one by one, logic outputs $s_1$,$s_2$,$s_3$ and physical outputs (in this case, p and EM) of the controller device (2) are collected in the signal acquisition submodule (1.3.1) of the monitoring module (1.3) for each of the candidate input patterns in order to generate measurements of said monitoring module (1.3). In this case, each measurement of the monitoring module (1.3) comprises the values ($v_1$, $v_2$, $v_3$, $v_4$, $v_5$), each of which is associated with each of the inputs ($e_1$, $e_2$, $e_3$, $e_4$, $e_5$), of the controller device (2); and it also comprises values associated with the power signals ($s_p$), electromagnetic emission ($s_{EM}$) signals, and response time. In other words, monitoring of the signals provided by the controller device (2) in response to the input patterns is carried out on two fronts:

- Monitoring the response of the controller device (2) to detect whether or not it has responded when being interrogated, as well as to detect what kind of response has been provided.

- Monitoring the signals of the controller device (2), for example, if it was a valid (physical or logic) signal; or an incorrect or late signal after exceeding the estimated maximum time for emitting said response.

Monitoring executed by the signal acquisition submodule (1.3.1) comprises continuously capturing the output signals coming from said controller device (2), taking into consideration the information of the signals ($s_1$, $s_2$, $s_3$, p, and em) and the response time in order to detect if the controller device (2) does not respond within the estimated maximum standby time. Monitoring must adjust the sampling time of the different output signals based on the maximum response time.

In summary, in this step 2.3, the controller device (2) receives the new input data pattern and it is executed according to the internal logic of said controller device (2). The execution of the input pattern in the controller device (2) may have been instrumented so that useful monitoring information is generated for the following steps. In the best case, the result of this execution will be a failure of the program executed in the controller device, and depending on the strategy, additional information will be obtained (by means of instrumentation). This latter information is usually of particular relevance for intelligence, understood as the mechanism or algorithm designed to locate the errors of the controller device (2).

2.4 Once measurements of the monitoring module (1.3) are available, the signal acquisition submodule (1.3.1) sends said measurements to the signal processing submodule (1.3.2), in which the measurements are processed. In this embodiment, like what would occur in the first operating mode, the measurements are processed in the time domain.

In other embodiments of the invention, at least one mathematical transformation (for example, FFT and/or wavelet; for the purpose of increasing the dimensionality of the search space having, as coordinates, the measurements of the monitoring module (1.3)) and, optionally, a dimensionality reduction technique (such as PCA), can be executed in the signal processing submodule (1.3.2). In this case, measurements associated with physical signals and measurements associated with logic signals are processed separately, and in turn, each of said physical measurements can be processed by means of a mathematical transformation and, optionally, a different dimensionality reduction technique.

However, going back to the current embodiment, the signal acquisition submodule (1.3.1) is configured for acquiring, for each input pattern $(v_1, v_2, v_3, v_4, v_5)$, the response time and the output signals $s_1, s_2, s_3$ and sending this information to the signal processing submodule (1.3.2). Each of these input patterns defines a point in the search space which, in this case, is also defined by the coordinates $(v_1, v_2, v_3, v_4, v_5)$ since no mathematical transformation has been applied and only input signals sampled over time are used.

2.5 For each of the possible input patterns (points), one or more distances with respect to one or more of the clusters defined during the first calibration operating mode are evaluated in the signal processing submodule (1.3.2). In this case, two distances will be taken into consideration, since only two clusters have been defined (representative of the standby mode and of the error-free operating mode of the controller device (2)).

2.6 Once the distances of all the candidate input patterns the different clusters have been evaluated, the signal processing submodule (1.3.2) stores said data for each of the candidate input patterns and sends it to the aggregation submodule (1.3.3). This aggregation module (1.3.3) is adapted to combine (perform the aggregation of) physical and logic signals as a single scalar estimator value ($f_n$) before sending them to the central processing unit (1.1), specifically feeding back to the database submodule (1.1.1). Said aggregation may comprise, for each candidate pattern, a weighted sum operation of both types of (physical and logic) measurements and of the distances to the different clusters, depending on the relevance or relative importance assigned thereto by one skilled in the art based on a pre-established criterion or prior knowledge about the controller device (2). For example, said criterion can be making the physical measurements and the logic measurements equally relevant, in which case both measurements are weighted at 50%, or it may be that physical measurements are particularly noisy and must be weighted in a less significant manner.

2.7 Once the data aggregated by the aggregation submodule (1.3.3) has been received in the database submodule (1.1.1), said database submodule stores the data. For example, the structure of the database of the database submodule (1.1.1) may comprise a table in which at least the values associated with physical outputs and response times, together with the scalar estimator value ($f_n$), are stored for each input pattern $(v_1, v_2, v_3, v_4, v_5)$. The table is sent by the database submodule (1.1.1) to the data ordering submodule (1.1.2).

2.8 The data ordering submodule (1.1.2) generates a ranking of input patterns ordered in a decreasing order based on the scalar estimator value ($f_n$), such that input patterns deviating farther away from the normal operation of the controller device (2) are in the first positions of the ranking, as they will gave a larger $f_n$ value associated therewith.

2.9 The data ordering submodule (1.1.2) sends the ranking to the selection submodule (1.1.3), which is responsible for choosing a subset of the candidate input patterns from the ranking. In this embodiment, the selection submodule (1.1.3) applies an elitist policy, in which a pre-established number of patterns is chosen from the ranking, for example, 10% or 50% having the highest $f_n$ value. The purpose of this is to search for measurements of the monitoring module (1.3) in the search hyperspace, in regions away from those already explored.

2.10 After steps 2.2-2.9 (deep iteration), the input patterns surpassing the selection filter will be provided again to the learning submodule (1.4.1) in order to adjust the parameters of the numerical model. This adjustment of the parameters of the numerical model refers to another re-estimation of the parameters of the probability distributions of the variables of the model, taking into consideration patterns which have surpassed the filter of the ranking. Moreover, if prior knowledge is also available, the numerical model can be optionally parameterized so as to utilize all of said prior information received from a prior intelligence phase. Once the numerical model has been updated, a new random sampling of the updated distributions of the parameters of said model is carried out to generate new input patterns to be tested in the controller device (2). Deep iteration is repeated until the proposed new input patterns no longer improve the scalar estimator value $f_n$ of their predecessors, and at that time patterns with greater $f_n$ are

considered potential candidate for generating errors in the controller device (2). The high-level iteration is then performed.

2.11 In high-level iteration, repetition of steps 2.1-2.10 is established to reach an end condition pre-established by one skilled in the art.

2.12 Reporting of errors ("bugs" or anomalies) is carried out parallel to steps 2.10 and 2.11. The input patterns which have been identified as causing an abnormal behavior in the controller device (2) which is tested are reported to another external device or stored (for example, in the central processing unit (1.1)). In that sense, the vulnerabilities found during the entire process must be recorded. Reporting of errors can be carried out in real time or when a specific end condition pre-established by the skilled person using the apparatus (1) is reached.

In another particular embodiment, a measuring instrument (3) or probe is connected to the controller device (2) for measuring signals which cannot be directly measured with said controller device (2). Advantageously, this allows taking into consideration more output signals which can be provided directly by the controller device (2), increasing the number of signals which are obtained from same. For example, when the controller device (2) presents severe hardware limitations, it is necessary to use measuring instruments (3), probes, and/or sensors, to obtain signal measurements during the execution of instructions or a type of logic in said controller device (2). In certain specific embodiments of the system of the invention, the connection between the measuring instrument (3) and the output of the controller device (2) comprises a connection with a data connector (for example, USB, SATA, etc.). In this particular embodiment of the invention, the measuring instrument (3) is connected to an oscilloscope (4) or another viewing instrument. Said oscilloscope (4) is in turn connected to the apparatus (1). It should be pointed out that the connection between the measuring instrument (3) and the controller device (2) is not necessarily a wired connection. Examples of measuring instruments (3) used in other specific examples of the system of the invention are wattmeters, temperature sensors, polymeters, timers, etc.

A more specific example of these embodiments of the system in which measuring instruments (3) are used is shown in Figure 3 which provides clarification of the way in which power and electromagnetism signals (physical signals) can be measured when the controller device (2) (for example, an embedded system such as a microcontroller which executes a set of instructions) itself is incapable of providing them. In this embodiment, the rest of the elements of the system are similar to those of Figure 2, and additionally a two-way connection is provided between the apparatus (1) and the controller device (2).

-    First, the apparatus (1) is connected to the viewing instrument or oscilloscope (4), for example, through an Ethernet port.
-    Then, the monitoring device (1.3) of the apparatus (1) sends a data pattern or a specific command to the controller device (2) through a serial port. Said data pattern or command can serve for the controller device (2) to initiate the execution of a program or a set of instructions. The controller device (2) receives said data pattern or command and executes the program.
-    During the execution of the program, the instrument (3) is used to measure physical signals associated with power consumption and/or electromagnetic emissions of the controller device (2). Said signals are viewed in the oscilloscope (4). The controller device (2) is synchronized with the oscilloscope (4), for example, by sending a synchronization signal ("trigger") when it starts the execution of the program through a general-purpose input/output (GPIO) pin of said controller device (2).
-    The controller device (2) provides the monitoring device (1.3) when the execution of the program has ended.
-    Lastly, the oscilloscope (4) sends the data of the received signals to the monitoring device (1.3) and the process is repeated until all the desired physical output signals of the controller device (2) have been recorded. Alternatively, the oscilloscope (4) can send the data to another element of the apparatus (1).

It should be pointed out that the embodiments which have been described correspond to the case of a semi-supervised learning having a first step of pretraining or calibration with input patterns which do not generate errors in the controller device (2), i.e., having part of the data/input patterns with the "not error" or "standby state" label. Therefore, in the method described above, a pre-training is performed with labeled data, but then the data acquired during the operation are no longer labeled. However, the supervised learning module (1.4) can also operate with supervised or completely unsupervised learning.

Numerical example

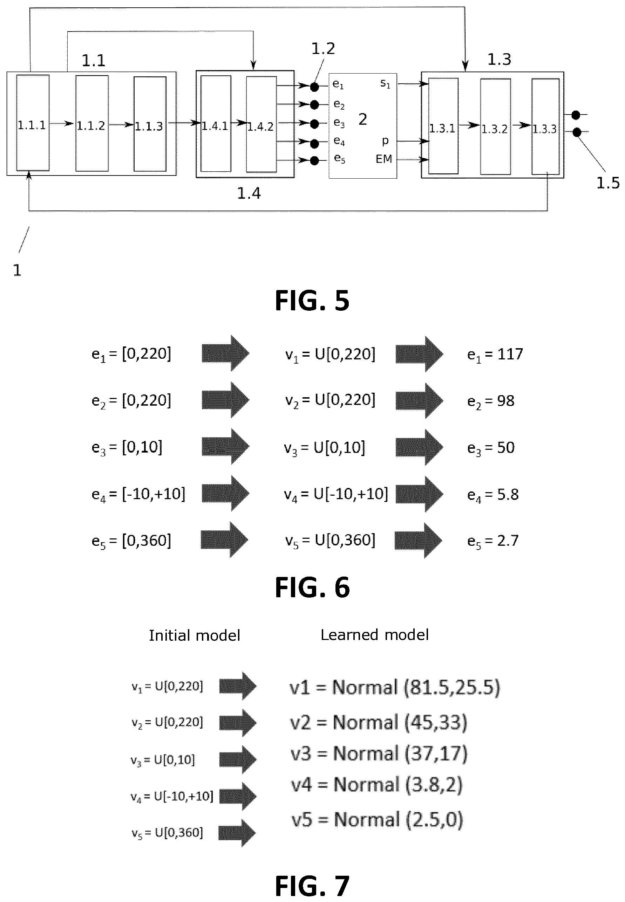

Lastly, by way of illustration, a step-by-step numerical example of the operation of the embodiment of the system of the invention illustrated in Figure 5 will be shown, in which the controller device (2) comprises five input signals ($e_i$, $i = 1 ...$

n) and three output signals: $s_1$ representing the "logic" response of the controller device (2) and which, in this case, can be a Boolean variable with two values: "OK" or "ERROR"), a power signal p, and an electromagnetic emission signal EM (the last two "physical" signals which exhibit a time dependence but which will be subjected to sampling in a single time instant for the sake of simplicity). Additionally, the signal of the response time ($\Delta$) of the controller device (2) in response to each input pattern applied thereto is measured.

Step 1. This process starts from a non-parameterized initial numerical model, which can be pre-established automatically or by one skilled in the art. Figure 6 (first column) shows the intervals in which the input signals, as well as the non-parameterized initial model (second column, said model is formed by variables $v_1$-$v_5$, associated with uniform distributions of input signals $s_1$-$s_5$), move. In said model, the notation U[X, Y] refers to a uniform distribution between values X and Y. For example, variables $v_1$ and $v_2$ are uniform distributions between 0 and 220.

Step 2. Since the numerical model still does not contain any useful data, in the first calibration operating mode, sampling is only performed, with the sampling submodule (1.4.2), on variables ($v_1$, ..., $v_5$), taking into consideration the uniform distributions, and random values thereof are chosen so that they constitute candidate input patterns for testing in the controller device (2). One of these random values is, for example (117, 98, 50, 5.8, 2.7), as shown in Figure 6 (third column). Likewise, it will be assumed that two clusters representative of the correct operating mode and of the standby mode of the controller device, obtained as described above, each of them represented by a centroid, are already available in this first calibration operating mode.

Step 3. Since the initial numerical model is still available, the candidate patterns, on which sampling has been performed by the sampling submodule (1.4.2), are introduced directly in the controller device (2) sequentially. For example, in this example the following four input patterns are introduced sequentially in the controller device (2):

| $v_1$, $v_2$, $v_3$, $v_4$, $v_5$ |
|---|
| 117, 98, 50, 5.8, 2.7 |
| 107, 78, 54, 1.8, 2.5 |
| 97, 65, 24, 6.8, 0.5 |
| 56, 12, 20, 5.8, 2.5 |

Step 4. The signal acquisition submodule (1.3.1) acquires the values of the physical and logic output signals ($s_1$, p and EM) provided by the controller device (2) in response to the input patterns of the preceding table and sends this acquired data to the signal processing submodule (1.3.2), in which the power p and electromagnetic emission EM signals are processed by means of a mere time sampling (discretization), with a single measurement being taken for each of them.

Step 5. The sets of data processed by the signal processing submodule (1.3.2) are provided to the data aggregation submodule (1.3.3), which applies clustering techniques on the physical signals, in this case power and emission EM signals, which are represented in the space of the parameters measured by the monitoring module (1.3). Then, distances ($d_{11}$ and $d_{12}$) between $x^1$ and the two clusters in the space defined by the power signals are measured. Similarly, distances ($d_{21}$, $d_{22}$ and $d_{23}$) between $x^2$ and the two clusters in the space defined by the electromagnetic emission signals are measured. In this case, ... Furthermore, for each of the input patterns which are introduced in the controller device (2), a single value of the response time is recorded based on the time signal $\Delta$. The processed data are recorded in a table such as the one shown below:

| $v_1$, $v_2$, $v_3$, $v_4$, $v_5$ | $S_1$ | $d_{11}$ | $d_{12}$ | $d_{21}$ | $d_{22}$ | $\Delta$ |
|---|---|---|---|---|---|---|
| 117, 98, 50, 5.8, 2.7 | OK | 0.5 | 0.7 | 0.2 | 0.3 | 38 |
| 107, 78, 54, 1.8, 2.5 | OK | 0.45 | 0.4 | 0.7 | 0.2 | 45 |
| 97, 65, 24, 6.8, 0.5 | OK | 0.65 | 0.3 | 0.4 | 0.5 | 25 |
| 56, 12, 20, 5.8, 2.5 | OK | 0.3 | 0.6 | 0.6 | 0.7 | 75 |

Step 6. There is obtained in the data aggregation submodule (1.3.3) a single auxiliary scalar value representative of the power signals, which will be referred to as $f_{power}$, defined as:

$$f_{power} = \frac{1}{p_{max}} \sum_{i}^{k_2} p_i \cdot \omega_i^{power}$$

In the equation above, $p_{max}$ represents the maximum power value, respectively, whereas $p_i$ correspond to the different power values, to which weights $\omega_i^{power}$ are respectively assigned to obtain a weighted sum, taking into account that $k_2$ is the total number of power measurements to be taken into consideration.

Likewise, there is obtained a single auxiliary scalar value representative of the electromagnetic emission signals, which will be referred to as $f_{EM}$, defined as:

$$f_{EM} = \frac{1}{EM_{max}} \sum_{i}^{k_1} EM_i \cdot \omega_i^{EM} ;$$

As with the power signals, $EM_{max}$ represents the maximum emission value, whereas $EM_i$ correspond to the different electromagnetic emission values to which weights $\omega_i^{EM}$ are assigned respectively to obtain a weighted sum. In turn, $k_1$ indicates the number of electromagnetic emission measurements measured.

In the definitions of functions above, applying a normalization to values resulting therefrom should be taken into account, i.e., these mathematical restrictions should be taken into consideration:

$$\sum_{i=1}^{k_1} \omega_i^{EM} = 1$$

$$\sum_{i=1}^{k_2} \omega_i^{power} = 1$$

The calculated values of $f_{EM}$ and $f_{power}$ are introduced in the value table of Step 5 as the only representatives of the electromagnetic emission and power signals, respectively, such that the following is obtained:

| $v_1, v_2, v_3, v_4, v_5$ | $S_1$ | $f_{power}$ | $f_{EM}$ | $\Delta$ |
|---|---|---|---|---|
| 117, 98, 50, 5.8, 2.7 | OK | 0.63 | 0.71 | 38 |
| 107, 78, 54, 1.8, 2.5 | OK | 0.33 | 0.81 | 45 |
| 97, 65, 24, 6.8, 0.5 | OK | 0.54 | 0.52 | 25 |
| 56, 12, 20, 5.8, 2.5 | OK | 0.74 | 0.72 | 75 |

Step 7. The scalar estimator value ($f_n$) is computed in the data aggregation submodule (1.3.3) based on the auxiliary functions defined in step 6, by means of the following formula:

$$f_n = (\Lambda_1 f_{EM} + \Lambda_2 f_{power}) \cdot \alpha \cdot \beta ;$$

where $\Lambda_1$ and $\Lambda_2$ are two scalars which fulfill the restriction $\Lambda_1 + \Lambda_2 = 1$, a is a scalar representing the reliability of the physical measurements with respect to the logic response of the controller device as a whole, and $\beta$ is a scalar denoting the confidence obtained in the estimated value of the duration of the time signal. Therefore, $f_n$ combines the information of the physical signals, the logic signals (in this case, $s_1$), and the response time signal as a single value. The $\alpha$ and $\beta$ values can be pre-established by one skilled in the art, or automatically set by an external device.

Preferably, the $\beta$ and $\alpha$ values are normalized in the range of [0-1]. For example, if the measurements of physical signals are considered to be equally as reliable as the response logic (logic signal values) of the device, then a value $\alpha = 0.5$ is assigned. If, in contrast, the physical measurements are considered to be rather unreliable, a value $\alpha \ll 0.5$, for example, 0.1, could be assigned.

The value of the scalar estimator is used to update the table of Step 6 and represent, as a single value, globally all the information of the physical, logic, and time signals, and finally the table would be as follows:

| $v_1, v_2, v_3, v_4, v_5$ | $f_n$ |
|---|---|
| 117, 98, 50, 5.8, 2.7 | 0.58 |
| 107,78, 54,1.8, 2.5 | 0.68 |
| 97, 65, 24, 6.8, 0.5 | 0.62 |
| 56, 12,20, 5.8, 2.5 | 0.82 |

Step 8. Based on the data from the table obtained after step 7, the selection submodule (1.1.3) is used to select a subset of the rows of the table according to a predetermined policy. For example, a selection criterion can be an elitist criterion, preserving 50% of the values (two rows of the preceding table) having the largest $f_n$ value. Said selected values will the only ones which will be fed back to the database submodule (1.1.1), for subsequent use in updating the numerical model.

It should be noted that, this case, for the learning of the numerical module of the machine learning module (1.4), only the values ($v_1$, ..., $v_5$) of the rows exceeding the elitist filter are required.

Step 9. The data aggregation submodule (1.3.3) provides the table finally obtained in the preceding step to the database submodule (1.1.1).

Step 10. Steps 2-9 represent a deep iteration, and the execution of said steps continues until it is considered that the proposed input patterns have reach a pre-established $f_n$ value. As a result of steps 2-9, the numerical model is updated as shown in Figure 7, such that it evolves and goes from comprising uniform distributions for each of the variables ($v_1$, ..., $v_5$), as shown previously in Figure 6, to comprising normal distributions for each of said variables, defined by a mean X and a standard deviation Y (which will be denoted as "Normal (X, Y)"). Said model will gradually adjust the mean and standard deviation parameters util input patterns with very large $f_n$ values are generated. However, there will come a time in which no amount of iteration will improve the scalar estimator value of the generated patterns, which will be considered as having reached the adjustment condition in said deep iteration. Upon reaching said point, in order to allow the exploration of other regions of the search space, transition to a high-level iteration occurs, in which it is established that more deep iterations are repeated iteratively but starting from a random initial sampling that is different from the original uniform distribution. The high-level iteration is repeated successively until the stop condition specified by one skilled in the art, for example, a specific number of errors is located, is reached.

It should be pointed out that the probability distributions of the parameters of the numerical model of this illustrative numerical example were assumed to be univariate, wherein each variable ($v_1$, $v_2$, ..., etc.) is independent of the rest. However, in other embodiments dependences between different parameters of the numerical model can be considered and multivariate distributions can also be considered.

Lastly, it should be mentioned that the formulas which have been introduced in this numerical example for computing the scalar estimator value ($f_n$) for an erroneous operating condition in the controller device (2) are non-limiting, and the skilled person can propose similar alternatives. Additionally, the formulas of this numerical example are compatible with all the embodiments of the apparatus (1) and of the system described throughout the present application.

**Claims**

1. An apparatus (1) for identifying erroneous input conditions in a controller device (2), the controller device (2) being adapted to process a plurality of input signals ($e_i$, $i = 1 ... n$) and provide at least one output signal ($s_j$, $j = 1 ... m$) when it is in the operating mode, wherein the apparatus (1) comprises:

   - a plurality of output ports (1.2) configured for providing input signals ($e_i$, $i = 1 ... n$) to the controller device (2);
   - a monitoring module (1.3) adapted to measure at least one scalar estimator value ($f_n$) for an erroneous operating condition in the controller device (2) when the controller device (2) is in the operating mode;
   - a machine learning module (1.4) which comprises a parameterizable numerical model representative of the device in an erroneous operating condition, adapted to provide a set of parameters ($v_i$, $i = 1 ... n$), each parameter $v_i$ being representative of the value of an input signal $e_i$ candidate for causing an erroneous operating condition in the controller device (2), the machine learning module (1.4) being configured to adopt:

      a first calibration operating mode in which the numerical model adjusts its parameters,
      a second estimation operating mode in which the numerical model performs sampling on the parameterizable numerical model and provides an output with the set of parameters ($v_i$, $i = 1 ... n$), or input pattern, for the controller device (2);

- a central processing unit (1.1) in communication with the machine learning module (1.4) and in communication with the monitoring module (1.3), the central processing unit (1.1) adapted to:

a) set the machine learning module (1.4) in the calibration operating mode and adjust its parameters to a set of pre-established initial values;
b) carry out an iterative process according to the following steps:

- setting the machine learning module (1.4) in the estimation operating mode by providing an input pattern through the plurality of output ports (1.2) at the input of the controller device (2) keeping the monitoring module (1.3) active and determining at least one scalar estimator value ($f_n$) for an erroneous operating condition in the controller device (2),
- setting the machine learning module (1.4) in the calibration operating mode and adjusting its parameters according to the input values which have given rise to values of the scalar estimator value ($f_n$) for an erroneous operating condition that are greater than a given pre-established value,

with the iterative method being executed until the machine learning module (1.4) has reached a pre-established adjustment condition;
c) provide the last input pattern with which the adjustment condition has been reached.

2. The apparatus (1) according to claim 1, wherein the parameterizable numerical model comprises a set of probability density functions for each parameter ($v_i$, $i = 1 \ldots n$).

3. The apparatus (1) according to claim 2, wherein:

- the probability density functions of each of the parameters, with pre-established initial values, are uniform probability density functions in the range of values of said parameter;
- the probability density functions of each of the parameters, when adjustment parameters are present, is a Gaussian function wherein the adjustment parameters are the mean and variance or the standard deviation.

4. The apparatus (1) according to claim 3, wherein for each parameter, the mean and variance, or the standard deviation, are evaluated based on the values of the parameter in all the iterations when the input pattern has given rise to values of the scalar estimator value ($f_n$) for an erroneous operating condition that are greater than the given pre-established value.

5. The apparatus (1) according to any of the preceding claims, wherein the central processing unit (1.1) is further adapted to:

- operate with a database storing at least the data provided by the monitoring module (1.3) and the input pattern used for feeding the controller device (2) while the monitoring module (1.3) is kept active;

and wherein the monitoring module (1.3) determines the scalar estimator value ($f_n$) for an erroneous operating condition from one or more of the following elements of the list:

- values of the logic signals of the controller device (2);
- values of the physical signals measured on the controller device (2);
- values of the distance between the values of the input pattern and values corresponding to input patterns representative of an erroneous operating condition.

6. The apparatus (1) according to claim 5, wherein values corresponding to an input pattern representative of an erroneous operating condition are the centroid of a cluster, wherein said cluster is obtained by means of a clustering method evaluated on the data stored in the database and the clustering condition depends on the scalar estimator value ($f_n$) for an erroneous operating condition.

7. The apparatus (1) according to claim 5 or 6, wherein the following steps are carried out;

- initially activating the database without values;
- carrying out an iterative process to search for input patterns which verify the erroneous operating condition according to the following sub-steps:

carrying out the iterative method which comprises steps a) to c) storing in the database at least the values of the data patterns of each iteration, the scalar estimator value ($f_n$) for an erroneous operating condition, the values of the logic signals of the controller device (2), the values of the physical signals measured on the controller device (2),

carrying out a clustering process with the data stored in the database in order to condition the calculation of the distances between the values of the input pattern and values corresponding to input patterns representative of an erroneous operating condition.

8. The apparatus (1) according to the preceding claim, wherein the machine learning module (1.4) is in the first calibration operating mode and the parameterizable numerical model has not yet been calibrated, wherein

the monitoring module (1.3) is further adapted to read logic output signals and to measure the physical signals of the device in the controller device (2);
the apparatus (1) is further adapted to:

- activate the monitoring module (1.3);
- provide an input data pattern ($v_i$, $i = 1 ... n$) generating in the plurality of output ports (1.2) input signals which are introduced in the controller device (2);
- collect, through the monitoring module (1.3), the logic output signals and physical signals of the controller device (2) resulting from the execution of the input data pattern;
- estimate the maximum execution time of the controller device (2);
- cluster each of the signals collected by the monitoring module (1.3) forming at least one cluster.

9. The apparatus (1) according to the preceding claim, further adapted to, after having determined the maximum execution time of the controller device (2):

- collect, through the monitoring module (1.3), the logic output signals and physical signals of the controller device (2) for an execution time equal to the maximum execution time with the controller device (2) not receiving input signals;
- cluster each of the signals collected by the monitoring module (1.3) forming at least a second cluster for each output measured in the controller device (2).

10. An apparatus (1), wherein the calculations of the monitoring module (1.3) are performed in the central processing unit (1.1).

11. The apparatus (1) according to any of the preceding claims, wherein the monitoring module (1.3) is adapted to:

- measure the difference between the at least one output signal ($s_j$, $j = 1 ... m$) provided by the controller device (2) and an expected pre-established output signal value, and provide a value representative of the error associated with the difference as a scalar estimator value ($f_n$) for an erroneous operating condition; or
- measure a power consumption value of the controller device (2), compare the power consumption pattern measured with a reference pattern representative of a pre-established non-erroneous operating mode, and provide a value representative of the difference between both patterns as a scalar estimator value ($f_n$) for an erroneous operating condition;
or
- measure a response time value of the controller device (2), compare the response time pattern measured with a reference pattern representative of a pre-established non-erroneous operating mode, and provide a value representative of the difference between both patterns as a scalar estimator value ($f_n$) for an erroneous operating condition; or
- measure an electromagnetic emission value of the controller device (2), compare the emission pattern measured with a reference pattern representative of a pre-established non-erroneous operating mode, and provide a value representative of the difference between both patterns as a scalar estimator value ($f_n$) for an erroneous operating condition;
or
- carry out a combination of any of the preceding measurements and provide a scalar estimator value ($f_n$) for an erroneous operating condition resulting from the contribution of any of the preceding corresponding scalar estimator values ($f_n$) for an erroneous operating condition.

12. The apparatus (1) according to the preceding claim, wherein the monitoring module (1.3) is further adapted to:

- measure a temperature value of the controller device (2), compare the temperature pattern measured with a reference pattern representative of a pre-established non-erroneous operating mode, and provide a value representative of the difference between both patterns as a scalar estimator value ($f_n$) for an erroneous operating condition; or
- measure an acoustic signal value of the controller device (2), compare the acoustic signal pattern measured with a reference pattern representative of a pre-established non-erroneous operating mode, and provide a value representative of the difference between both patterns as a scalar estimator value ($f_n$) for an erroneous operating condition; or
- carry out a combination of any of the preceding measurements and/or the measurements according to claim 11 and provide a scalar estimator value ($f_n$) for an erroneous operating condition resulting from the contribution of any of the corresponding scalar estimator values ($f_n$) for an erroneous operating condition.

13. The apparatus (1) according to the preceding claim, wherein the data stored for each test performed on the controller device (2) further comprises at least one element from the following list:

- measurements of the output signals ($s_j$, $j$ = 1 ... m) of the controller device (2);
- measurement of the power consumption of the controller device (2);
- measurement of the electromagnetic signals emitted by the controller device (2);
- measurement of the response time of the controller device (2);
- measurement of the temperature of the controller device (2);
- measurement of an acoustic signal of the controller device (2);
- a combination of two or more of the above.

14. The apparatus (1) according to claim 12 or 13, wherein the central processing unit (1.1) is further adapted to carry out a clustering operation (clusterization) of the stored data, with the cluster being in a search space the coordinates of which are the measurements of the monitoring module (1.3), and to identify those clusters corresponding to non-erroneous operating modes.

15. The apparatus (1) according to any of the preceding claims, wherein all or part of the set of measurement parameters of the monitoring module (1.3) is obtained by means of a time sampling of the at least one output signal ($s_j$, $j$ = 1 ... $m$) provided by the controller device (2), caused by all or part of the input parameters ($e_i$, $i$ = 1 ... n), and wherein the search space is a multidimensional hyperspace defined at least from said set of measurement parameters of the monitoring module (1.3) in the time domain.

16. The apparatus (1) according to the preceding claim, wherein the at least one output signal ($s_j$, $j$ = 1 ... $m$) provided by the controller device (2), caused by all or part of the input parameters ($e_i$, $i$ = 1 ... $n$), is transformed by means of a mathematical transformation executed by the central processing unit (1.1) on the time sampling of the at least one output signal ($s_j$, $j$ = 1 ... $m$), and wherein the search space is an expanded multidimensional hyperspace which comprises the set of measurement parameters of the monitoring module (1.3) in the time domain and said transformed set of measurement parameters of the monitoring module (1.3).

17. The apparatus (1) according to the preceding claim, wherein the mathematical transformation is one from the following list:

- Fourier transform;
- wavelet transform;
- discrete cosine transform;
- a combination of two or more of the preceding transforms.

18. The apparatus (1) according to any of the preceding claims, wherein the random sampling of the numerical model of the machine learning module (1.4) is carried out taking into consideration sampling of a distribution comprised in the following list:

- a probability distribution with continuous input values if the input value is continuous;
- a probability distribution with discrete input values if the input value is discrete;
- a probability distribution with mixed input values formed by a combination of two or more of the preceding distributions if the input values are mixed.

19. The apparatus (1) according to any of the preceding claims, wherein the central processing unit (1.1) is adapted to carry out a dimensionality reduction technique on the sets of input parameters already used by the monitoring module (1.3), and wherein the dimensionality reduction technique must preserve at least one pre-established value of the information of said input parameters, preferably 95% of the information of the input parameters.

20. The apparatus (1) according to the preceding claim, wherein the dimensionality reduction technique comprises at least one element from the following list:

- a principal component analysis, PCA;
a non-negative matrix factorization, NMF;
- a linear discriminant analysis, LDA;
- a generalized discriminant analysis, GDA;
- a low-variance filter;
- a high-correlation filter;
- autoencoders;
- a combination of two or more of the above.

21. The apparatus (1) according to any of the preceding claims, wherein the numerical model comprises a probabilistic graphical model and/or a neural network.

22. The apparatus (1) according to any of claims 16 to 21, wherein the central processing unit (1.1) is configured for receiving a mathematical transformation selection signal, wherein a value of said mathematical transformation selection signal selects the mathematical transformation which the central processing unit (1.1) executes on the time sampling of the input signals ($e_i$, $i = 1 \dots n$).

23. The apparatus (1) according to any of claims 6 to 22, wherein the clustering method comprises an element from the following list:

- density-based spatial clustering of applications with noise, DBSCAN;
- OPTICS multiscale algorithm;
- support-vector machines;
- expectation-maximization algorithm;
- Gaussian mixtures;
- agglomerative hierarchical clustering;
- balanced iterative reducing and clustering using hierarchies;
- affinity propagation algorithm;
- mean shift algorithm;
- k-nearest neighbors;
- algorithms based on centroid calculation, preferably k-means;
- linear regressions;
- a combination of two or more of the above.

24. A system which comprises:

- the apparatus (1) according to any of the preceding claims;
- a controller device (2) communicated with the apparatus (1) and adapted to process a plurality of input signals ($e_i$, $i = 1 \dots n$) and provide at least one output signal ($s_j$, $j = 1 \dots m$) when it is in the operating mode;

wherein the controller device (2) further provides an output synchronization signal which is configured for activating the apparatus (1) and putting it in the operating mode.

**FIG. 1**

**FIG. 2**

**FIG. 3**

**FIG. 4**

**FIG. 5**

$e_1 = [0,220]$ → $v_1 = U[0,220]$ → $e_1 = 117$

$e_2 = [0,220]$ → $v_2 = U[0,220]$ → $e_2 = 98$

$e_3 = [0,10]$ → $v_3 = U[0,10]$ → $e_3 = 50$

$e_4 = [-10,+10]$ → $v_4 = U[-10,+10]$ → $e_4 = 5.8$

$e_5 = [0,360]$ → $v_5 = U[0,360]$ → $e_5 = 2.7$

**FIG. 6**

Initial model                    Learned model

$v_1 = U[0,220]$ → v1 = Normal (81.5,25.5)

$v_2 = U[0,220]$ → v2 = Normal (45,33)

$v_3 = U[0,10]$ → v3 = Normal (37,17)

$v_4 = U[-10,+10]$ → v4 = Normal (3.8,2)

$v_5 = U[0,360]$ → v5 = Normal (2.5,0)

**FIG. 7**

## INFORME DE BÚSQUEDA INTERNACIONAL

| Solicitud internacional N° |
| --- |
| **PCT/ES2022/070620** |

### A. CLASIFICACIÓN DEL OBJETO DE LA SOLICITUD
**INV.   G06F11/22     G06F11/30     G06N20/00**
**ADD.**

De acuerdo con la Clasificación Internacional de Patentes (CIP) o según la clasificación nacional y CIP.

### B. SECTORES COMPRENDIDOS POR LA BÚSQUEDA

Documentación mínima buscada (sistema de clasificación seguido de los símbolos de clasificación)

**G06F   G06N**

Otra documentación consultada, además de la documentación mínima, en la medida en que tales documentos formen parte de los sectores comprendidos por la búsqueda

Bases de datos electrónicas consultadas durante la búsqueda internacional (nombre de la base de datos y, si es posible, términos de búsqueda utilizados)   **EPO-Internal**

### C. DOCUMENTOS CONSIDERADOS RELEVANTES

| Categoría* | Documentos citados, con indicación, si procede, de las partes relevantes | Relevante para las reivindicaciones N° |
| --- | --- | --- |
| A | ECEIZA MAIALEN ET AL: "Fuzzing the Internet of Things : A Review on the Techniques and Challenges for Efficient Vulnerability Discovery in Embedded Systems " , IEEE INTERNET OF THINGS JOURNAL, IEEE, USA, vol. 8, no. 13, 2 de Febrero de 2021 (2021-02-02) , páginas 10390-10411, XP011862112, DOI: 10.1109/ JIOT.2021.3056179 [recuperado el 2021-06-22] resumen página 10392 página 10394 -página 10396 página 10400 página 10408 figura 12 ----- -/-- | 1-24 |

[X] En la continuación del Recuadro C se relacionan otros documentos    [ ] Los documentos de familias de patentes se indican en el Anexo

| * | Categorías especiales de documentos citados: | "T" | documento ulterior publicado con posterioridad a la fecha de presentación internacional o de prioridad que no pertenece al estado de la técnica pertinente pero que se cita por permitir la comprensión del principio o teoría que constituye la base de la invención. |
| --- | --- | --- | --- |
| "A" | documento que define el estado general de la técnica no considerado como particularmente relevante. | | |
| "E" | solicitud de patente o patente anterior pero publicada en la fecha de presentación internacional o en fecha posterior. | "X" | documento particularmente relevante; la invención reivindicada no puede considerarse nueva o que implique una actividad inventiva por referencia al documento aisladamente considerado. |
| "L" | documento que puede plantear dudas sobre una reivindicación de prioridad o que se cita para determinar la fecha de publicación de otra cita o por una razón especial (como la indicada). | "Y" | documento particularmente relevante; la invención reivindicada no puede considerarse que implique una actividad inventiva cuando el documento se asocia a otro u otros documentos de la misma naturaleza, cuya combinación resulta evidente para un experto en la materia. |
| "O" | documento que se refiere a una divulgación oral, a una utilización, a una exposición o a cualquier otro medio. | | |
| "P" | documento publicado antes de la fecha de presentación internacional pero con posterioridad a la fecha de prioridad reivindicada. | | |
| | | "&" | documento que forma parte de la misma familia de patentes. |

| Fecha en que se ha concluido efectivamente la búsqueda internacional. **24 de Mayo de 2023** | Fecha de expedición del informe de búsqueda internacional **06 de Junio de 2023** |
| --- | --- |
| Nombre y dirección postal de la Administración encargada de la búsqueda internacional **EPO** | Funcionario autorizado |
| N° de fax | N° de teléfono |

Formulario PCT/ISA/210 (segunda hoja) (Enero 2015)

**INFORME DE BÚSQUEDA INTERNACIONAL**

Solicitud internacional N°

**PCT/ES2022/070620**

C (continuación).                     DOCUMENTOS CONSIDERADOS RELEVANTES

| Categoría* | Documentos citados, con indicación, si procede, de las partes relevantes | Relevante para las reivindicaciones N° |
|---|---|---|
| A | BUDNIK CHRISTOF ET AL : "Guided Test Case Generation through AI Enabled Output Space Exploration" , 2018 IEEE/ACM 13TH INTERNATIONAL WORKSHOP ON  AUTOMATION OF SOFTWARE TEST (AST) , ACM, 28 de Mayo de 2018 (2018-05-28) , páginas 53-56, XP033445572 , [recuperado el 2018-11-14 ] resumen página 53 - página 55 ------------ | 1-24 |

Formulario PCT/ISA/210 (continuación de la segunda hoja) (Enero 2015)